# EUROPEAN PATENT APPLICATION

(11) **EP 2 239 461 A2**
(43) Date of publication of application: **13.10.2010**
(21) Application number: 09177436.4
(22) Date of filing: 30.11.2009
(51) Int. Cl.: F03D 1/06, F03D 11/00

(54) **Sparcap system for wind turbine rotor blade and method of fabricating wind turbine rotor blade**

(30) Priority: 11.12.2008 US 332729
(71) Applicant: General Electric Company, Schenectady, NY 12345 (US)
(72) Inventor: Akhtar, Afroz, 560066 Bangalore, Karnataka (IN)
(74) Representative: Bedford, Grant Richard

(57) **Abstract**

A rotor blade (18) for a wind turbine (10) is provided. The rotor blade (18) includes a first blade section (26) and a second blade section (28) coupled to the first blade section to form the rotor blade, each of the first blade section and the second blade section having a leading edge (30) and a trailing edge (32), a first sparcap (40) including a carbon material (70) and positioned on an inner surface (42) of the first blade section, and a second sparcap (44) including a glass material (72) and positioned on the first blade section, the second sparcap positioned with respect to the first sparcap in one of a leading edge direction and a trailing edge direction.

## Description

The embodiments described herein relate generally to a wind turbine rotor blade and, more particularly, to a sparcap system for a wind turbine rotor blade.

Wind turbine blades typically include two blade shell portions of fiber reinforced polymer. The blade shell portions are molded and then coupled together along cooperating edges using a suitable adhesive material. At least some turbine blades include one or more bracings that are adhesively coupled to an inner surface of a first blade shell portion. A cooperating second blade shell portion is then arranged on top of the bracings and adhesively coupled to the first blade shell portion along its edges.

The blade shell portions are typically made using suitable evenly distributed fibers, fiber bundles, or mats of fibers layered in a mold part. However, the blade shell portions are relatively light and have only low rigidity. Therefore, a stiffness and a rigidity, as well as a buckling strength, of the blade shell portions may not withstand the loads and forces exerted on the rotor blade during operation. To increase the strength of the rotor blades, the blade shell portions are reinforced by sparcaps laminated to the inner surface of the blade shell portions. Typically, the sparcaps extend substantially along a longitudinal length of the rotor blade.

Flapwise loads, which cause the rotor blade tip to deflect towards the wind turbine tower, are transferred along the rotor blade predominantly through the sparcaps. At least some conventional rotor blades include sparcaps fabricated from a suitable glass material or a suitable carbon material. The stiffness requirements of the conventional wind turbine rotor blade designs are met by a completely glass sparcap or a completely carbon sparcap, thus tolerating a mass or cost penalty. Due to different stiffness-to-strength ratios for these materials, usage of these materials separately results in either an over-stiffened rotor blade or an over-strengthened rotor blade.

Further, with a continuously increasing length of wind turbine rotor blades in recent years, meeting stiffness requirements is a major concern in the structural design of the rotor blade. Stiffness requirements met by glass sparcaps makes the rotor blade heavy and over-strengthened, while carbon sparcaps yield a light, but over-stiffened rotor blade. Carbon sparcaps are advantageous due to high stiffness and low density but, on the other hand, carbon sparcaps are expensive compared to glass sparcaps. As such, conventional blade designs are either over-strengthened resulting in a heavier design or over-stiffened resulting in costly design.

In one aspect according to the present invention, a rotor blade for a wind turbine is provided. The rotor blade includes a first blade section and a second blade section coupled to the first blade section to form the rotor blade. Each of the first blade section and the second blade section has a leading edge and a trailing edge. A first sparcap including a carbon material is positioned on and coupled to an inner surface of the first blade section. A second sparcap including a glass material is positioned on the first blade section. The second sparcap is positioned with respect to the first sparcap in one of a leading edge direction and a trailing edge direction and coupled to the inner surface of the first blade section.

In another aspect, a rotor blade for a wind turbine is provided. The rotor blade includes a first blade section and a second blade section coupled to the first blade section to form the rotor blade. Each of the first blade section and the second blade section has a leading edge and a trailing edge. A first sparcap including a glass material is positioned on and coupled to an inner surface of the first blade section. A second sparcap is coupled to the first sparcap. The second sparcap includes a glass material and is positioned on and coupled to an inner surface of the second blade section. A third sparcap including a carbon material is positioned on and coupled to the inner surface of the first blade section. The third sparcap is positioned with respect to the first sparcap in one of a leading edge direction and a trailing edge direction. A fourth sparcap is coupled to the third sparcap. The fourth sparcap includes a carbon material and is positioned on and coupled to the inner surface of the second blade section.

In yet another aspect, a method is provided for fabricating a rotor blade for a wind turbine. The method includes providing a first blade section and a second blade section. Each of the first blade section and the second blade section has a leading edge and a trailing edge. A first sparcap including a carbon material is coupled to an inner surface of the first blade section. A second sparcap including a glass material is positioned with respect to the first sparcap in one of a leading edge direction and a trailing edge direction. The second sparcap is coupled to the inner surface of the first blade section.

Various aspects and embodiments of the present invention will now be described in connection with the accompanying drawings; in which:
Figure 1 is a schematic view of a wind turbine;
Figure 2 is a side view of an exemplary wind turbine rotor blade; and
Figures 3-10 are cross-sectional views of exemplary wind turbine rotor blades.

The embodiments described herein provide a rotor blade for a wind turbine that includes a sparcap system suitable for providing sufficient strength to the rotor blade while decreasing an overall weight of the rotor blade and/or fabrication cost. The sparcap system includes a first sparcap including a carbon material positioned on and coupled to an inner surface of a first blade section of the rotor blade and a second sparcap including a glass material positioned adjacent the first sparcap and coupled to the first blade section, and with respect to the first sparcap in a leading edge direction or a trailing edge direction along a cross-sectional width of the rotor blade. The use of a first sparcap including a carbon material and a second sparcap adjacent the first sparcap including a glass material allows for fabrication of a longer and/or a larger rotor blade, while reducing sparcap mass and blade static moment, which can be defined as a rotor blade dead weight moment on a wind turbine rotor hub.

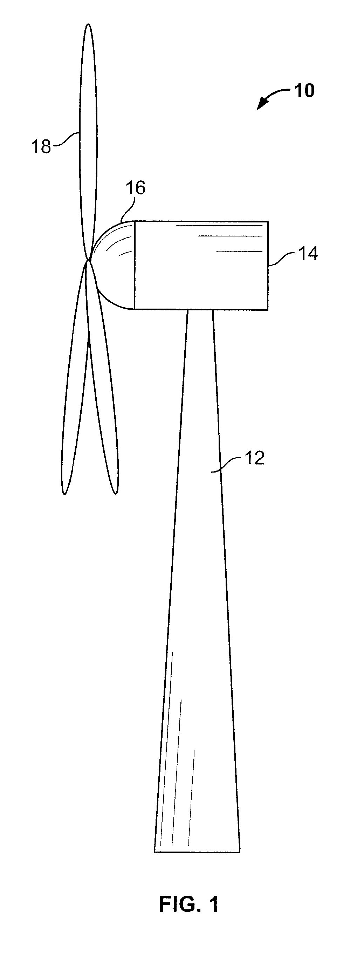

Figure 1 is a schematic view of a wind turbine 10. Wind turbine 10 includes a tower 12 to which a machine nacelle 14 is mounted at a first or top end portion. A hub 16 having a plurality of rotor blades 18, such as three rotor blades 18, is mounted to a first lateral end of machine nacelle 14.

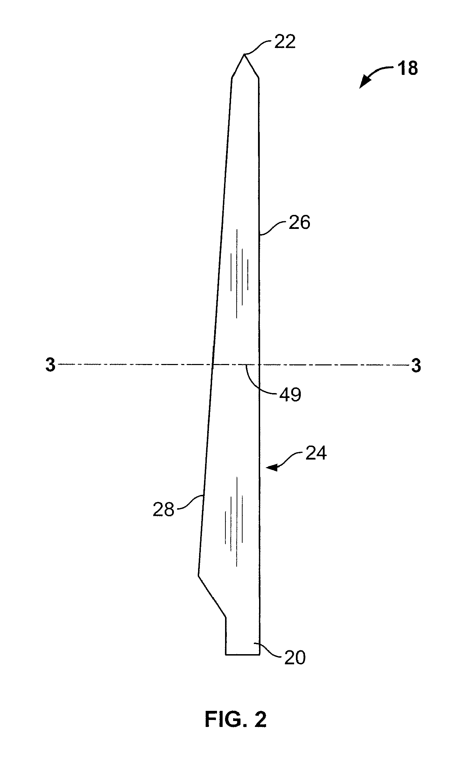

Figure 2 is a schematic view of an exemplary configuration of rotor blade 18. Rotor blade 18 includes a first end or root section 20 configured to facilitate mounting rotor blade 18 to hub 16 and a second or tip end 22 opposing root section 20. A body 24 of rotor blade 18 extends between root section 20 and tip end 22. In one embodiment, rotor blade 18 includes a first blade section 26, such as a suction side blade section, and an opposing second blade section 28, such as a pressure side blade section, coupled to first blade section 26 to form rotor blade 18. Further, a suction side sparcap is provided at an inner surface of the suction side rotor blade shell and/or a pressure side sparcap is provided at an inner surface of the pressure side rotor blade shell. Typically, the suction side sparcap and/or the pressure side sparcap extend almost the full longitudinal length of rotor blade 18. However, shorter sparcaps are also used in alternative embodiments.

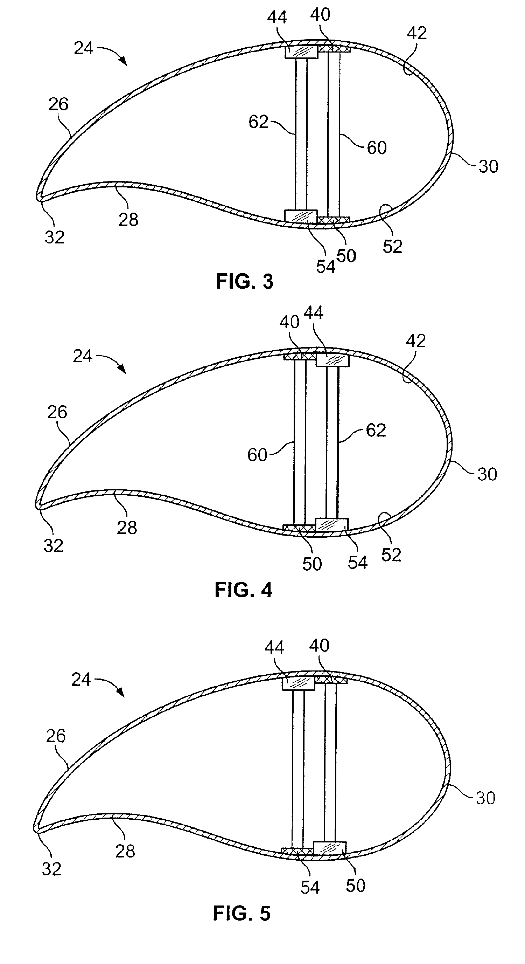

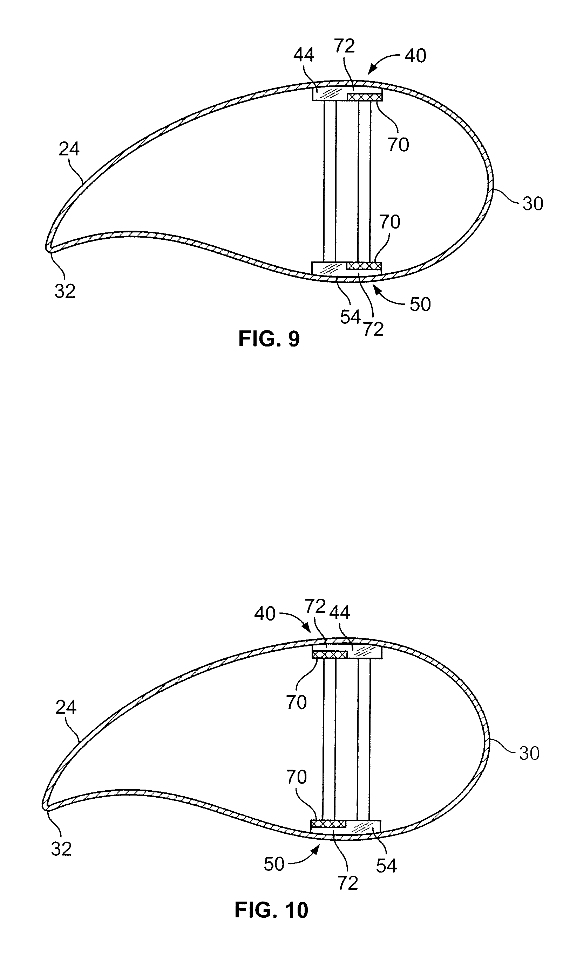

Figures 3-10 are cross-sectional views of an exemplary body 24 of rotor blade 18 along sectional line 3-3 in Figure 2. As shown in Figures 3-10, first blade section 26, such as a suction side blade section, is coupled to second blade section 28, such as a pressure side blade section, to form rotor blade 18 defining a contour of rotor blade 18 as shown in the cross-sectional views. It should be apparent to those skilled in the art and guided by the teachings herein provided that any suitable method may be used to couple second blade section 28 to first blade section 26 to form rotor blade 18. In this embodiment, first blade section 26 and second blade section 28 are coupled at a leading edge 30 and an opposing trailing edge 32 of rotor blade 18.

Referring further to Figures 3-10, a first sparcap 40 is positioned on and coupled to an inner surface 42 of first blade section 26. In the embodiments shown in Figures 3-10, first sparcap 40 includes a carbon material, such as a suitable carbon fiber reinforced matrix, and/or a glass material, such as a suitable glass fiber reinforced matrix. Suitable carbon materials include, without limitation, unidirectional or bidirectional carbon roving, unidirectional or bidirectional carbon prepreg, unidirectional or bidirectional carbon tape or mat and any other suitable carbon fiber preforms. Carbon prepregs include unidirectional or bidirectional carbon fibers pre-impregnated with a B-stage resin (i.e., carbon fibers enriched with resin prior to lay-up) and carbon fiber preforms are formed by injecting a resin into a dry stack of carbon fibers oriented in a desired orientation, and shaped or formed to a final shape in an external mold or mandrel. Suitable glass materials include, without limitation, unidirectional or bidirectional glass roving, unidirectional or bidirectional glass prepreg, unidirectional or bidirectional glass tape or mat and any other suitable glass fiber preforms. Glass prepregs include unidirectional or bidirectional glass fibers pre-impregnated with a B-stage resin (i.e., glass fibers enriched with resin prior to lay-up) and glass fiber preforms are formed by injecting a resin into a dry stack of glass fibers oriented in a desired orientation, and shaped or formed to a final shape in an external mold or mandrel.

In one embodiment, the sparcaps described herein are laminated to an inner surface of the respective blade section. However, it should be apparent to those skilled in the art and guided by the teachings herein provided that any suitable method may be used to couple the sparcaps to the inner surface of the respective blade section. A second sparcap 44 including a glass material, such as a suitable glass fiber reinforced matrix, and/or a carbon material, such as a suitable carbon fiber reinforced matrix, is positioned on and coupled to inner surface 42 of first blade section 26. Second sparcap 44 is positioned with respect to first sparcap 40 in a leading edge direction, i.e., towards leading edge 30, or a trailing edge direction, i.e., towards trailing edge 32, along a cross-sectional width of rotor blade 18.

In one embodiment, first sparcap 40 has a first thickness 46 and second sparcap 44 has a second thickness 48 different from first thickness 46. In a particular embodiment, first thickness 46 and/or second thickness 48 varies along a length of rotor blade 18 in certain embodiments. First thickness 46 may be different than second thickness 48 at any distance from an end point, such as tip end 22, along a length of rotor blade 18, such as at a distance 49, shown in Figure 2, from tip end 22. First thickness 46 and/or second thickness 48 vary according to design requirements and the configuration selected. However, in one embodiment, first thickness 46 is about 20 mm to about 25 mm and second thickness is about 30 mm to about 35 mm at distance 49.

Rotor blade 18 also includes a third sparcap 50 positioned on an inner surface 52 of second blade section 28. In the embodiments shown in Figures 3-10, third sparcap 50 includes a carbon material, such as a suitable carbon fiber reinforced matrix, and/or a glass material, such as a suitable glass fiber reinforced matrix. A fourth sparcap 54 including a glass material, such as a suitable glass fiber reinforced matrix, and/or a carbon material, such as a suitable carbon fiber reinforced matrix, is positioned on and coupled to inner surface 52 of second blade section 28. Fourth sparcap 54 is positioned with respect to third sparcap 50 in a leading edge direction, i.e., towards leading edge 30, or a trailing edge direction, i.e., towards trailing edge 32, along a cross-sectional width of rotor blade 18. A first sparweb 60 couples first sparcap 40 to third sparcap 50 and a second sparweb 62 couples second sparcap 44 to fourth sparcap 54, as shown for example in Figure 3.

In one embodiment, third sparcap 50 has a third thickness 56 and fourth sparcap 54 has a fourth thickness 58 different from third thickness 56. In a particular embodiment, third thickness 56 and/or fourth thickness 58 varies along a length of rotor blade 18 in certain embodiments. Third thickness 56 may be different than fourth thickness 58 at any distance from an end point, such as tip end 22, along a length of rotor blade 18, such as at a distance 49, shown in Figure 2, from tip end 22.

Referring further to Figure 3, in one embodiment, first sparcap 40 is formed of a carbon material and second sparcap 44 is formed of a glass material. Second sparcap 44 is positioned with respect to first sparcap 40 in the trailing edge direction and coupled to inner surface 42. Further, third sparcap 50 is formed of a carbon material and fourth sparcap 54 is formed of a glass material. Fourth sparcap 54 is positioned with respect to third sparcap 50 in the trailing edge direction and coupled to inner surface 52. First sparcap 40 is coupled to third sparcap 50 by sparweb 60 and second sparcap 44 is coupled to fourth sparcap 54 by sparweb 62. Alternatively, first sparcap 40 is formed of a carbon material and second sparcap 44 is formed of a glass material and positioned with respect to first sparcap 40 in the leading edge direction and coupled to inner surface 42, as shown in Figure 4. Further, third sparcap 50 is formed of a carbon material and fourth sparcap 54 is formed of a glass material. Fourth sparcap 54 is positioned with respect to third sparcap 50 in the leading edge direction and coupled to inner surface 52.

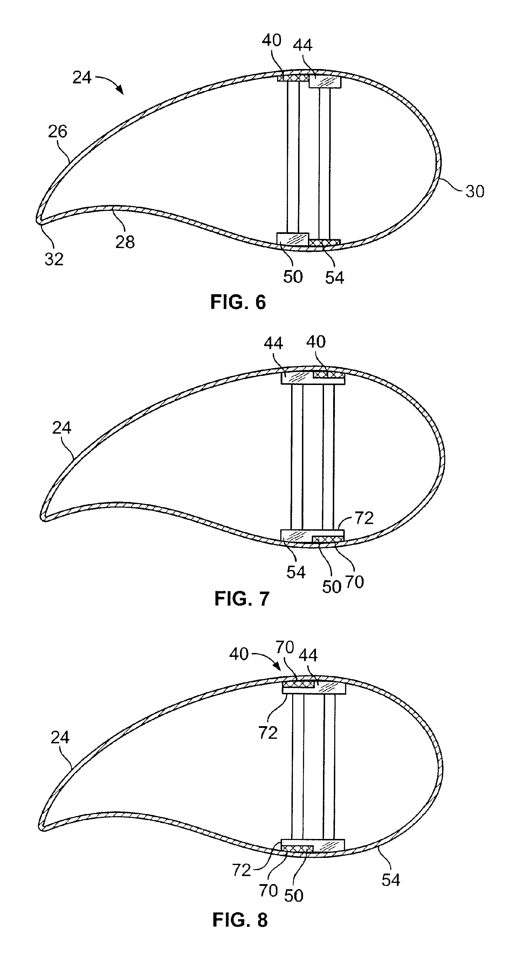

Referring to Figures 5 and 6, in alternative embodiments, first sparcap 40 is formed of a carbon material and second sparcap 44 is formed of a glass material. As shown in Figure 5, second sparcap 44 is positioned with respect to first sparcap 40 in the trailing edge direction and coupled to inner surface 42. However, in this alternative embodiment, third sparcap 50 is formed of a glass material and fourth sparcap 54 is formed of a carbon material. Fourth sparcap 54 is positioned with respect to third sparcap 50 in the trailing edge direction and coupled to inner surface 52. First sparcap 40 is coupled to third sparcap 50 by sparweb 60 and second sparcap 44 is coupled to fourth sparcap 54 by sparweb 62. Alternatively, first sparcap 40 is formed of a carbon material and second sparcap 44 is formed of a glass material and positioned with respect to first sparcap 40 in the leading edge direction and coupled to inner surface 42, as shown in Figure 6. Further, third sparcap 50 is formed of a glass material and fourth sparcap 54 is formed of a carbon material. Fourth sparcap 54 is positioned with respect to third sparcap 50 in the leading edge direction and coupled to inner surface 52.

As shown in Figures 7-10, first sparcap 40 and/or third sparcap 50 include a glass material in addition to a carbon material. Referring further to Figures 7 and 8, first sparcap 40 is positioned on and coupled to inner surface 42 of first blade section 26. In one embodiment, first sparcap 40 includes a carbon material layer 70, such as a suitable carbon fiber reinforced matrix layer, that is coupled directly to inner surface 42 and a glass material layer 72, such as a suitable glass fiber reinforced matrix layer, coupled to carbon material layer 70. Second sparcap 44 includes a glass material and is positioned on and coupled to inner surface 42 of first blade section 26. As shown in Figure 7, second sparcap 44 is positioned with respect to first sparcap 40 in the trailing edge direction, i.e., towards trailing edge 32. Alternatively, as shown in Figure 8, second sparcap 44 is positioned with respect to first sparcap 40 in the leading edge direction, i.e., towards leading edge 30. In a further alternative embodiment, second sparcap 44 and/or fourth sparcap 54 includes a carbon material (not shown), such as a carbon material layer, in addition to a glass material, such as a glass material layer.

As shown in Table 1, a rotor blade including alternative sparcap systems including a single glass sparcap (Sample 1), a glass sparcap positioned in a leading edge direction with respect to a carbon sparcap along a cross-sectional width of the rotor blade (Sample 2), a carbon sparcap positioned in a leading edge direction with respect to a glass sparcap along a cross-sectional width of the rotor blade (Sample 3), and a single carbon sparcap (Sample 4) were tested to optimize various parameters. Each rotor blade was tested for a sparcap mass, a tip deflection and a blade static moment, as defined above.

**Table 1**

| Parameter | Sample 1 | Sample 2 | Sample 3 | Sample 4 |
|---|---|---|---|---|
| Sparcap Mass (kg) | 4,809 | 2,904 | 2,821 | 1,485 |
| Tip Deflection (mm) | 5,800 | 5,800 | 5,800 | 5,267 |
| Moment (kg-m) | 221,768 | 174,834 | 179,026 | 144,734 |

As shown in Table 1, providing a rotor blade with a two sparcap system including sparcaps made of different materials, i.e., a first sparcap made of a suitable carbon material and a second sparcap positioned adjacent first sparcap and made of a suitable glass material, such as Sample 2 and Sample 3, substantially decreased a weight of the rotor blade when compared to a rotor blade including only a glass sparcap (Sample 1) without undesirably decreasing a tip deflection and/or increasing a blade static moment for the rotor blade during operation. The two sparcap system allows wind turbine rotor blade designers to make suitable design choices based on design requirements.

Two sparcap system using different materials effectively utilizes properties of the two different materials to satisfy the stiffness requirements for wind turbine rotor blades. The addition of a carbon sparcap contributes to a greater stiffness, thus, reducing an amount of glass material required to meet the stiffness requirements for wind turbine rotor blades. As a result, dimensions of both sparcaps can be optimized in view of design requirements.

The sparcap system and the resulting wind turbine rotor blades meet stiffness requirements for a longer rotor blade at a low cost, meet static moment specifications for the rotor blade, enable rotor blade designers to perform a tradeoff study between cost and mass of the rotor blade, and facilitate suppressing buckling issues associated with a longer rotor blade.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A rotor blade for a wind turbine, said rotor blade comprising:
   a first blade section and a second blade section coupled to said first blade section to form said rotor blade, each of said first blade section and said second blade section having a leading edge and a trailing edge;
   a first sparcap comprising a carbon material and positioned on an inner surface of said first blade section; and
   a second sparcap comprising a glass material and positioned on said first blade section, said second sparcap positioned with respect to said first sparcap in one of a leading edge direction and a trailing edge direction.
2. A rotor blade in accordance with Clause 1 further comprising:
   a third sparcap comprising a carbon material and positioned on an inner surface of said second blade section; and
   a fourth sparcap comprising a glass material and positioned on said second blade section, said fourth sparcap positioned with respect to said third sparcap in one of the leading edge direction and the trailing edge direction.
3. A rotor blade in accordance with any preceding Clause further comprising:
   a first sparweb coupling said first sparcap to said third sparcap; and
   a second sparweb coupling said second sparcap to said fourth sparcap.
4. A rotor blade in accordance with any preceding Clause further comprising:
   a first sparweb coupling said first sparcap to said fourth sparcap; and
   a second sparweb coupling said second sparcap to said third sparcap.
5. A rotor blade in accordance with any preceding Clause wherein said first sparcap comprises a carbon fiber reinforced matrix.
6. A rotor blade in accordance with any preceding Clause wherein said second sparcap comprises a glass fiber reinforced matrix.
7. A rotor blade in accordance with any preceding Clause wherein said first sparcap has a first thickness and said second sparcap has a second thickness.
8. A rotor blade in accordance with any preceding Clause wherein at least one of said first thickness and said second thickness varies along a length of said rotor blade.
9. A rotor blade in accordance with any preceding Clause wherein said first thickness is different than said second thickness at a first distance from an end point of said rotor blade along a length of said rotor blade.
10. A rotor blade in accordance with any preceding Clause wherein said first sparcap further comprises a glass material.
11. A rotor blade in accordance with any preceding Clause wherein said second sparcap further comprises a carbon material.
12. A rotor blade for a wind turbine, said rotor blade comprising:
   a first blade section and a second blade section coupled to said first blade section to form said rotor blade, each of said first blade section and said second blade section having a leading edge and a trailing edge;
   a first sparcap comprising a glass material, said first sparcap positioned on an inner surface of said first blade section;
   a second sparcap coupled to said first sparcap, said second sparcap comprising a glass material and positioned on an inner surface of said second blade section;
   a third sparcap comprising a carbon material and positioned on the inner surface of said first blade section, said third sparcap positioned with respect to said first sparcap in one of a leading edge direction and a trailing edge direction; and
   a fourth sparcap coupled to said third sparcap, said fourth sparcap comprising a carbon material and positioned on the inner surface of said second blade section.
13. A rotor blade in accordance with any preceding Clause wherein at least one of said third sparcap and said fourth sparcap further comprises a glass material.
14. A rotor blade in accordance with any preceding Clause further comprising:
   a first sparweb coupling said first sparcap to said second sparcap; and
   a second sparweb coupling said third sparcap to said fourth sparcap.
15. A rotor blade in accordance with any preceding Clause wherein at least one of said first sparcap and said second sparcap comprises a glass fiber reinforced matrix.
16. A rotor blade in accordance with any preceding Clause wherein at least one of said third sparcap and said fourth sparcap comprises a carbon fiber reinforced matrix.
17. A rotor blade in accordance with any preceding Clause wherein said first sparcap has a first thickness and said third sparcap has a second thickness, at least one of said first thickness and said second thickness varies along a length of said rotor blade.
18. A method for fabricating a rotor blade for a wind turbine, said method comprising:
   providing a first blade section and a second blade section, each of said first blade section and said second blade section having a leading edge and a trailing edge;
   coupling a first sparcap comprising a carbon material to an inner surface of the first blade section;
   positioning a second sparcap comprising a glass material with respect to the first sparcap in one of a leading edge direction and a trailing edge direction; and
   coupling the second sparcap to the inner surface of the first blade section.
19. A method in accordance with Clause 18 further comprising:
   coupling a third sparcap comprising a carbon material to an inner surface of the second blade section;
   positioning a fourth sparcap comprising a glass material with respect to the third sparcap in one of the leading edge direction and the trailing edge direction; and
   coupling the fourth sparcap to the inner surface of the second blade section.
20. A method in accordance with Clause 18 or 19 further comprising coupling the first sparcap to the third sparcap and coupling the second sparcap to the fourth sparcap.

## Claims

1. A rotor blade (18) for a wind turbine (10), said rotor blade comprising:
a first blade section (26) and a second blade section (28) coupled to said first blade section to form said rotor blade, each of said first blade section and said second blade section having a leading edge (30) and a trailing edge (32);
a first sparcap (40) comprising a carbon material (70) and positioned on an inner surface (42) of said first blade section; and
a second sparcap (44) comprising a glass material (72) and positioned on said first blade section, said second sparcap positioned with respect to said first sparcap in one of a leading edge direction and a trailing edge direction.

2. A rotor blade (18) in accordance with Claim 1 further comprising:
a third sparcap (50) comprising a carbon material (70) and positioned on an inner surface (42) of said second blade section (28); and
a fourth sparcap (54) comprising a glass material and positioned on said second blade section, said fourth sparcap positioned with respect to said third sparcap in one of the leading edge direction and the trailing edge direction.

3. A rotor blade (18) in accordance with Claim 2 further comprising:
a first sparweb (60) coupling said first sparcap (40) to said third sparcap (50); and
a second sparweb (62) coupling said second sparcap (44) to said fourth sparcap (54).

4. A rotor blade (18) in accordance with Claim 2 or Claim 3 further comprising:
a first sparweb (60) coupling said first sparcap (40) to said fourth sparcap (54); and
a second sparweb (62) coupling said second sparcap (44) to said third sparcap (50).

5. A rotor blade (18) in accordance with any preceding Claim wherein said first sparcap (40) comprises a carbon fiber reinforced matrix.

6. A rotor blade (18) in accordance with any preceding Claim wherein said second sparcap (44) comprises a glass fiber reinforced matrix.

7. A rotor blade (18) in accordance with any preceding Claim wherein said first sparcap (40) has a first thickness (46) and said second sparcap (44) has a second thickness (48).

8. A rotor blade (18) in accordance with Claim 7 wherein at least one of said first thickness (46) and said second thickness (48) varies along a length of said rotor blade.

9. A rotor blade (18) in accordance with Claim 7 or 8 wherein said first thickness (46) is different than said second thickness (48) at a first distance from an end point of said rotor blade along a length of said rotor blade.

10. A rotor blade (18) in accordance with any preceding Claim wherein said first sparcap (40) further comprises a glass material.
